# EUROPEAN PATENT SPECIFICATION

(11) **EP 2 754 553 B1**
(45) Date of publication and mention of the grant of the patent: **22.01.2020**
(21) Application number: 14150803.6
(22) Date of filing: 10.01.2014
(51) Int. Cl.: B31F 1/07, B32B 37/12, B32B 37/20, B32B 38/06, D21H 27/02, D21H 27/32

(54) **Converting machine and method for making cleaning paper having decorative embossing on both sides.**
Verarbeitungsmaschine und Verfahren zur Herstellung von Reinigungspapiertüchern mit dekorativer Prägung auf beiden Seiten
Machine et procédé de conversion pour la fabrication d'un papier de nettoyage ayant un gaufrage décoratif sur les deux côtés

(30) Priority: 11.01.2013 TR 201300438
(43) Date of publication of application: 16.07.2014
(73) Proprietor: HAYAT KIMYA SANAYI ANONIM SIRKETI, 41275 Kocaeli (TR)
(72) Inventor: Aydin, Lutfi, 41275 Kocaeli (TR)
(74) Representative: Dericioglu, E. Korhan

(56) References cited:
- US-A1- 2007 184 246
- US-A1- 2012 255 671

## Description

### TECHNICAL FIELD

The present invention relates to a converting machine having at least one embossing roll providing embossing to the outer layer of a cleaning paper by means of the recesses and tabs thereof provided on the outer wall; and at least one joining roll positioned at the vicinity of the embossing roll.

### PRIOR ART

As in most cleaning papers, one of the basic customer perception in toilet papers is the volume of the toilet paper. As the volume and thus the comfort of toilet paper are increased, the weight of the paper is not increased and thus, fiber consumption and negative environmental effects are decreased.

In the production technology of multi-layer traditional toilet paper, embossing is applied to the outer layer, and intermediate adhesive is applied to the layer whereto embossing is applied, and said layer is joined to the other layer, and thus production is realized. Said process provides the paper to seen as having a bigger volume, however at the same time, leads to resistance loss. The process is applied in the converting step of the toilet paper. Decorative embossing is applied to a single outer surface, and volume and absorbing capacity are increased.

In application TR 2011/04324, three-layer cleaning papers where embossing is applied to both sides and the machine realizing said application are disclosed. Said application is valid only for three-layer cleaning papers. After the outer layers receive the adhesive, the adhesive may dry until the outer layers arrive at the joining unit and the embossing may disappear and the formation may be lost. Moreover, in the cleaning paper, the adhesion regions on the side of the outer layer facing the intermediate layer are not wide enough to provide the required formation.

In the application TR 2000/02524, toilet papers and towels whose both sides are embossed and the production method of said toilet paper and of said toilet towel are disclosed. In said application, decorative embossing application can be applied to a single outer layer of the toilet paper since there is a single adhesive unit, and both of the outer layers cannot be decorative patterned. In the decorative pattern on the side where adhesive application is not realized, volume is decreased, and the embossing on said surface becomes indistinct. Moreover, said system is not designed so as to meet the condition where continuous winding is desired, since when this system is used in mass production machines, the indistinct embossing remains on the upper surface, and an undesired condition occurs. This system is suitable for start/stop machi nes.

In the patent application US57336223, the embossing method is described which is applied by using the end-to-end joining method. In this method, a different pattern cannot be applied to the two outer layers, and decorative embossing application cannot be realized.

In the patent application US2007184246, on which the preamble of claim 1 is based, a multiply web material comprising at least three plies, wherein a first and a second ply forming outer surfaces of the web material comprising decorative elements projecting towards the inside of the web material obtained by multiple embossing steps with varying embossing heights is disclosed.

In the patent application US2012255671, a method for producing a multiply web material wherein first, second and third plies are combined in a single step is disclosed.

As a result, because of the abovementioned problems, a solution is required in the related technical field.

### BRIEF DESCRIPTION OF THE INVENTION

The present invention relates to a cleaning paper having decorative embossing on both sides and relates to a converting machine, in order to eliminate the abovementioned disadvantages and in order to bri ng new advantages to the related technical field.

The main object of the present invention is to provide a cleaning paper having volume increase by keeping the unit weight fixed without deteriorating comfort, to provide a converting machine producing said cleaning paper, and to provide a production method.

In order to realize the abovementioned object and all of the objects to be deducted from the detailed description below, the present invention is a converting machine for producing a cleaning paper which comprises a bottom outer layer, an upper outer layer, and an intermediate layer provided between the outer layers. Accordingly, the converting machine of the present invention comprises a first lamination unit comprising a bottom embossing roll provided with recesses and tabs on the outer wall for providing decorative embossing to the bottom outer layer and comprising one lamination mechanism provided so as to transfer adhesive to the side of the bottom outer layer facing the intermediate layer and a joining roll positioned at a vicinity of the bottom embossing roll for joining the intermediate layer with the bottom outer layer and a second lamination unit comprising one lamination mechanism provided so as to transfer adhesive outwardly towards the side of the upper outer layer facing the intermediate layer, an upper embossing roll provided with recesses and tabs on the outer wall for providing decorative embossing to the upper outer layer in a direction opposite to the direction of the decorative embossing provided to the bottom outer layer and a joining roll positioned at a vicinity of the upper embossing roll for joining the adherent bottom outer layer and the intermediate layer with the upper outer layer, wherein the decorative embossing to the bottom outer layer is provided by the recesses of the bottom embossing roll and projects towards the outside of the cleaning paper; and the first lamination unit comprises a micro embossing roll and a press roll having an outer wall in contact with the outer wall of the micro embossing roll, the intermediate layer passing between the micro embossing roll and the press roll, the micro embossing roll being provided such that the bottom outer layer and the intermediate layer can pass between the bottom embossing roll and the mi cro embossi ng roll.

In a preferred embodiment of the present invention, the first lamination unit comprises a second press roll provided at a vicinity of the bottom embossing roll whose outer wall is in contact with the outer wall of the bottom embossing roll. Thus, it applies pressure to the bottom outer layer passing through the bottom embossing roll, and provides the embossing to be more effective.

Due to the micro embossing roll, micro embossing is provided to the intermediate layer.

In a preferred embodiment of the present invention, the micro embossing roll comprises pluralities of ridges in spot form on the outer wall thereof.

Due to the passing of the intermediate layer between the micro embossing roll and the press roll, the effect of the micro embossing provided to the intermediate layer is increased.

In a preferred embodiment of the present invention, the second lamination unit comprises a third press roll provided at a vicinity of the upper embossing roll, whose outer wall is in contact with the outer wall of the upper embossi ng roll.

In a preferred embodiment of the present invention, the lamination units comprise pluralities of transfer rolls positioned such that there is a certain distance in between and controlling the tension of the cleaning paper layers.

In a preferred embodi ment of the present i nventi on, an outer wall of the respective joining roll is in contact to the outer wall of the respective embossi ng roll. Thus, the adhering of the layers to each other is strengthened.

In a preferred embodiment of the present invention, the lamination mechanisms comprise an adhesive chamber wherein the adhesive is provided, an anilox roll provided at a vicinity of the adhesive chamber so as to receive the adhesive from the adhesive chamber, and a printing roll positioned between the anilox roll and the embossi ng roll.

In a preferred embodiment of the present invention, the distance between the lamination mechanisms and the part where the outer layers are joined to the intermediate layer is short such that the adhesive transferred to the side of the outer layers facing the intermediate layer does not dry in said distance.

In a preferred embodiment of the present invention, the anilox rolls comprise pluralities of cells on the surface thereof which are in micron level.

In a preferred embodiment of the present invention, there is an unreeling unit positioned before the lamination units and having at least one unreeling station.

In a further realisation of the present invention, a converting process performed by the converting machine for producing a cleaning paper comprises the process steps of providing embossing to the outer layer of a cleaning paper by means of the recesses and tabs of the outer wall of at least one of the bottom embossing roll and the upper embossing roll, and providing micro embossi ng to the intermediate layer by the micro embossi ng roll, and joining by passing of cleaning paper layers between said at least one embossing roll and the corresponding joining roll positioned at the vicinity of the embossing roll. As an improvement, the present invention comprises the steps of:
a) providing decorative embossing outwardly towards the bottom outer layer, transferring adhesive to the side of the bottom outer layer facing the intermediate layer by the first lamination mechanism, and providing micro embossing to the intermediate layer by the first lamination unit
b) providing decorative embossing to the upper outer layer in a direction opposite to the direction provided to the bottom outer layer, transferring adhesive to the side of the upper outer layer facing the intermediate layer by the second lamination mechanism and joining the upper outer layer with the bottom outer layer and the intermediate layer coming from the first lamination unit by the second lamination unit

In a preferred embodiment of the present invention, said step (a) comprises the following sub-steps:
i) providing decorative embossing outwardly on the bottom outer layer by means of the recesses and tabs provided on the bottom embossing roll as the bottom outer layer passes through the bottom embossing roll
ii) transferring adhesive towards the tabs of the bottom embossing roll by the first lamination mechanism and thus, transferring adhesive to the side of the bottom outer layer facing the intermediate layer
iii) providing micro embossing to the intermediate layer by passing the intermediate layer between a micro embossing roll and the first press roll having an outer wall in contact with the outer wall of the micro embossing roll
iv) passing the bottom outer layer and the intermediate layer between the bottom embossi ng roll and the joining roll and adheri ng the layers to each other
v) transferri ng the i ntermedi ate layer and the bottom outer layer to the second lamination unit by means of at least one transfer roll

In a preferred embodiment of the present invention, in said step (i), the bottom outer layer passes between the bottom embossing roll and the second press roll having an outer wall which is in contact with the outer wall of the bottom embossing roll and obtaining a decorative embossing by means of the pressure applied by the second press roll to the bottom outer layer.

In a preferred embodiment of the present invention, in said step (ii), the adhesive is transferred from the adhesive chamber positioned in the first lamination mechanism to the anilox roll provided at a vicinity of the adhesive chamber and is transferred from the anilox roll to the bottom outer layer by means of a printing roll provided between the bottom embossi ng roll and the anilox roll.

In a preferred embodiment of the present invention, the anilox roll receives the adhesive from the adhesive chamber to pluralities of cells in micron level provided on the surface and transfers the adhesive to the printing roll.

In a preferred embodiment of the present invention, in said step (iii), the micro embossing of the intermediate layer is realized by obtaining embossing by means of the presence of the pluralities of ridges in spot form provided on the outer wall of the micro embossing roll, and by means of the pressure applied by the first press roll to the intermedi ate layer.

In a preferred embodiment of the present invention, said step (b) comprises the following sub-steps:
i) providing decorative embossing outwardly by means of the recesses and tabs provided on the upper embossing roll on the upper outer layer as the upper outer layer passes through the upper embossi ng roll
ii) transferring adhesive to the tabs of the upper embossing roll by the second lamination mechanism and thus transferring adhesive to the side of the upper outer layer facing the i ntermedi ate layer
iii) joining the upper outer layer with bottom outer layer and the intermediate layer coming from the first lamination unit between the second joining roll and the upper embossi ng roll.

In a preferred embodiment of the present invention, in step (i), the upper outer layer passes between the upper embossi ng roll and the third press roll having the outer wall provided in contact with the outer wall of the upper embossi ng roll and decorative embossing is obtained by means of the pressure applied by the third press roll to the upper outer layer.

In a preferred embodiment of the present invention, in step (ii), the adhesive is transferred from the adhesive chamber, provided in the second lamination mechanism, to the anilox roll provided at a vicinity of the adhesive chamber and is transferred from the anilox roll to the upper outer layer by means of a printing roll provided between the upper embossi ng roll and the anilox roll.

In a preferred embodiment of the present invention, the anilox roll takes the adhesive from the adhesive chamber to the pluralities of cells in micron level provided on the surface thereof and transfers the adhesive to the pri nti ng roll.

### BRIEF DESCRIPTION OF THE FIGURES

In Figure 1, a general schematic view of the related units of the subject matter converting machi ne is given.
In Figure 2a, the schematic representative view of the first lamination unit of the subject matter converting machine is given.
In Figure 2b, a schematic representative view of the second lamination unit of the subject matter converting machine is given.
In Figure 3a, a schematic view of the cleaning paper of the prior art is given.
In Figure 3b, a schematic view of the cleaning paper produced by the converting machi ne is given.

### REFERENCE NUMBERS

10 Unreeling unit
11 Unreeling station
20 First lamination unit
21 Bottom embossi ng roll
211 Outer wall
212 Recess
213 Tab
22 Press roll
221 Outer wall
23 Joining roll
231 Outer wall
24 Micro embossing roll
241 Outer wall
25 Press roll
251 Outer wall
26 Transfer rolls
27 Lamination mechanism
271 Adhesive chamber
272 Anilox roll
273 Printing roll
30 Second lamination unit
31 Upper embossi ng roll
311 Outer wall
312 Recess
313 Tab
32 Press roll
321 Outer wall
33 Joining roll
331 Outer wall
34 Transfer rolls
35 Lamination mechanism
351 Adhesive chamber
352 Anilox roll
353 Printing roll
40 Cleaning paper
41 Upper outer layer
411 Ridging region
412 Crushing part
413 Adhering region
414 Gap
42 Bottom outer layer
421 Ridging region
422 C rushi ng part
423 Adhering region
424 Gap
43 Intermediate layer

### DETAILED DESCRIPTION OF THE INVENTION

In this detailed description, the subject matter cleaning paper, having decorative embossing on both sides, and the converting machine are described with references to examples which will not form any restricting effect for providing understandi ng of the subject matter in a better manner.

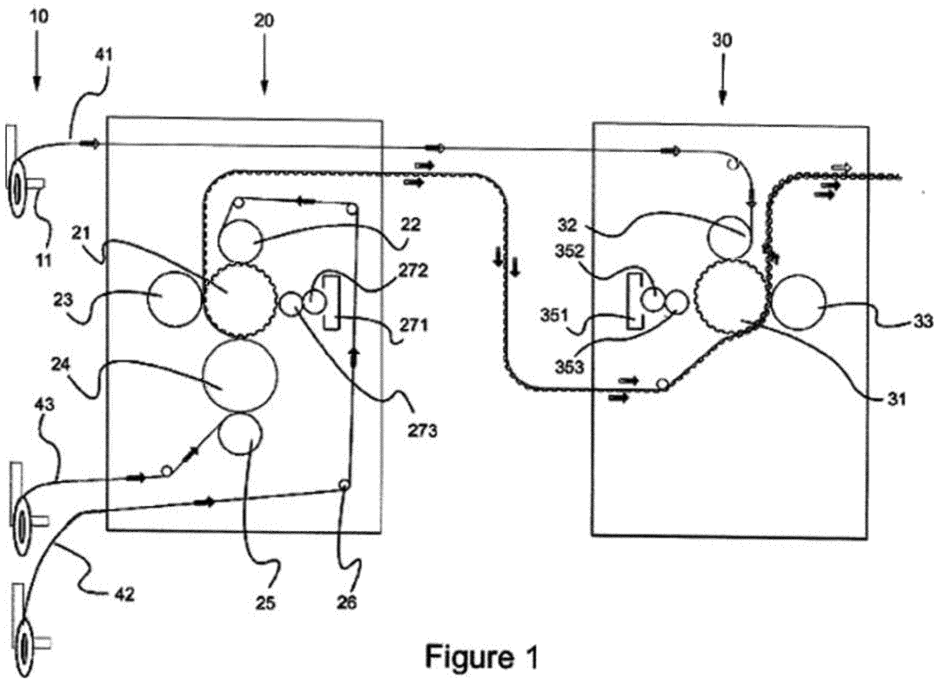

With reference to Figure 1, the converting machine generally comprises a first lamination unit (20) and a second lamination unit (30) at the continuation of the first lamination unit (20). Before the converting machine, there is an unreeling unit (10) providi ng transfer of the layers (41, 42, 43) of a cleaning paper (40). The unreeling unit (10) comprises at least one unreeling station (11). In the preferred application, there are three unreel i ng stations (11).

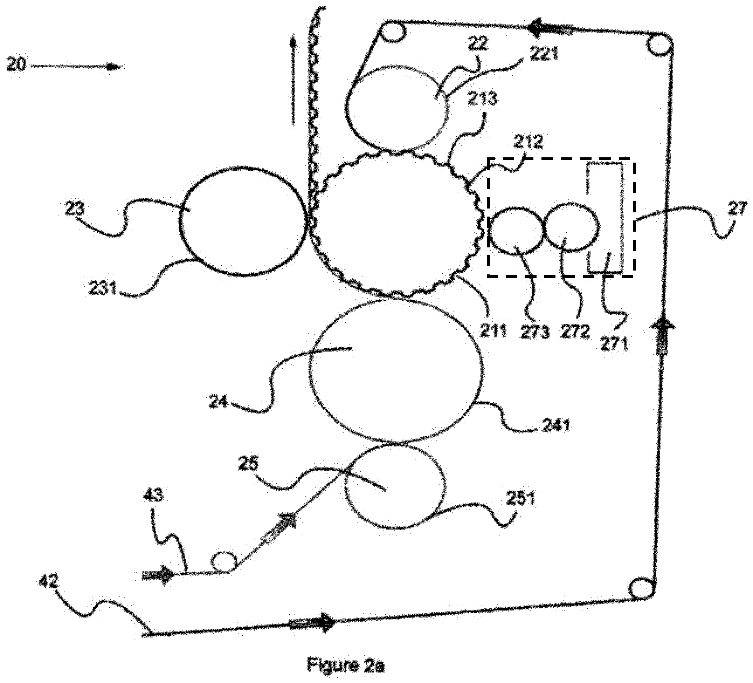

With reference to Figure 2a, in the first lamination unit (20), there is a steel bottom embossing roll (21) having recesses (212) and tabs (213) so as to provide a pattern to the bottom outer layer (42) of the cleaning paper (40) on the outer wall (211) thereof. On the upper side of the bottom embossing roll (21), there is a press roll (22) in rubber form whose outer wall (221) is in contact with the outer wall (211) of the bottom embossing roll (21) and there is a joining roll (23) in rubber form having an outer wall (231) which is in contact with the outer wall (211) of the bottom embossing roll (21) and positioned around the bottom embossing roll (21). Since the joining roll (23) and the bottom embossi ng roll (21) are in contact, the layers (42, 43) can be held to each other. The first lamination unit (20) comprises a lamination mechanism (27) positioned at the opposite side of the bottom embossing roll (21) facing the joining roll (23).

On the lamination mechanism (27), there is a printing roll (273); an anilox roll (272) and an adhesive chamber (271), wherein the adhesive is provided, positioned side by side. The three sides of the adhesive chamber (271) are closed, and the unclosed side thereof faces the anilox roll (272). The surface of the anilox roll (272) is preferably coated with ceramic and there are cells (not illustrated in the figure) thereon which are in micron level. The printing roll (273) has a rubber structure and is positioned between the bottom embossing roll (21) and the anilox roll (272). The adhesive used can mix with water and does not give damage to the structure of the cleaning paper (40).

At the bottom side of the bottom embossing roll (21), there is a micro embossing roll (24) whose outer wall (241) does not contact the outer wall (211) of the bottom embossing roll (21) and provided such that the cleaning paper layers (42, 43) can pass through. On the outer wall (241) of the micro embossing roll (24), there are at least 30 ridges (not illustrated in the figure) in each cm2. The distance between the lamination mechanism (27) and the micro embossing roll (24) is short so as to prevent drying of the adhesive taken by the bottom outer layer (42) of the cleaning paper (40) until it is joined to the intermediate layer (43). Again at the bottom side of the micro embossing roll (24), there is a flat press roll (25) whose outer wall (251) is in contact with the outer wait (241) of the micro embossing roll (24). The first lamination unit (20) moreover adjusts and controls the tension of the cleaning paper (40) layers (42, 43), and comprises transfer rolls (26) providing transfer of the layers (42, 43).

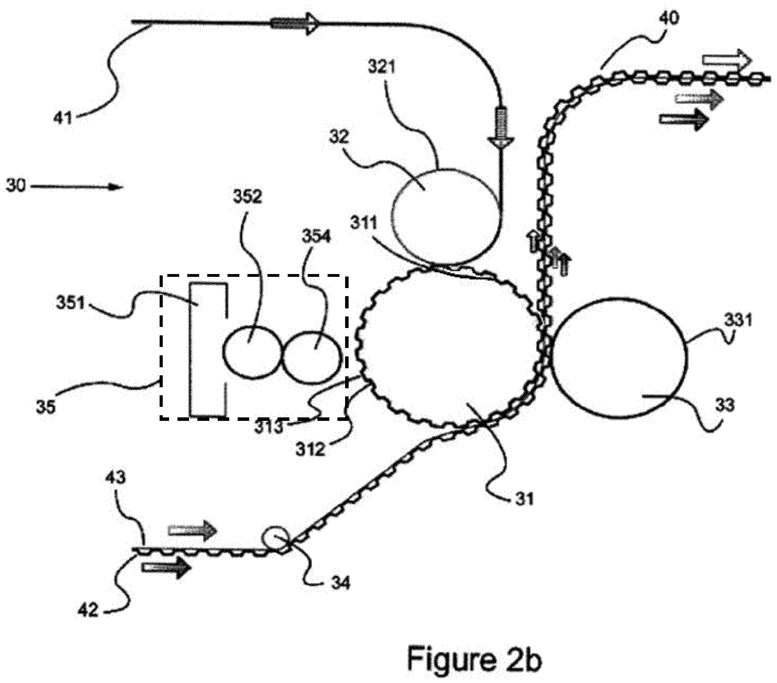

With reference to Figure 2b, the second lamination unit (30) positioned at the continuation of the first lamination unit (20) comprises an upper embossing roll (31), and a press roll (32) having an outer wall (321) which is in contact with the outer wall of the upper embossing roll (31). Moreover, on the second lamination unit (30), there is a rubber joining roll (33) having an outer wall (331) which is in contact with the outer wall (311) of the upper embossing roll (31) and positioned at any region around the upper embossing roll (31). The upper embossing roll (31) comprises recesses (312) and tabs (313) on the outer wall (311) so as to provide pattern to the upper outer layer (41). Moreover, on the second lamination unit (30), there is a lamination mechanism (35) comprising an anilox roll (352) and a printing roll (353) positioned side by side. On the lateral side of the anilox roll (352), there is an adhesive chamber (351). The lamination mechanism (35) provided in the second lamination unit (30) is the same embodiment as the lamination mechanism (27) provided in the first lamination unit (20). The surface of the anilox roll (352) is preferably coated with ceramic, and there are cells (not illustrated in the figure) thereon in micron level. In the second lamination unit (30), there are transfer rolls (34) providing layer transfer by adjusting and controlling the tension of the layers (41, 42, 43) of the cleaning paper (40).

The process applied in the converting machine whose structural details are given above is realized as follows. In the preferred application, decorative embossing is applied to the toilet paper having at least three layers. With reference to Figure 1 and 2a, first of all, the bottom outer layer (42) of the toilet paper coming from the unreeling stations (11) placed in the unreel i ng unit (10) passes through the transfer rolls (26), and passes between the press roll (22) and the bottom embossing roll (21). Here, a pattern, whose ridges are facing outwardly, appears on the bottom outer layer (42) thanks to the recesses (212) and tabs (213) of the bottom embossing roll (21), and a decorative embossing is formed. The press roll (22) applies pressure to the bottom outer layer (42) passing above the bottom embossing roll (21), and provides application of the pattern to the bottom outer layer (42). The bottom outer layer (42), advancing by taking a pattern from the bottom embossing roll (21), passes between the bottom embossing roll (21) and the printing roll (273) placed on the lamination mechanism (27). Meanwhile, the anilox roll (272) provided on the lamination mechanism (27) takes the adhesive provided in the adhesive chamber (271) onto the cells provided thereon, and transfers the adhesive to the printing roll (273). The printing roll (273) transfers the adhesive to the tab (213) parts of the bottom embossing roll (21). Thus, the tabs, provided on the face of the bottom outer layer (42) facing the intermediate layer (43), are adhered. The recesses (212) of the bottom embossing roll (21) provide the decorative embossi ng of the bottom outer layer (42) facing outwardly.

The bottom outer layer (42), passing through the lamination process, continues to advance, and enters between the micro embossing roll (24) and the bottom embossing roll (21). At the same time, the intermediate layer (43), coming from the unreeling station (11), is transferred between the press roll (25) and the micro embossing roll (24) and the transfer rolls (26). The intermediate layer (43), passing through the micro embossing roll (24), has a micro embossing in spot form by means of the presence of the ridges in spot form provided on the micro embossing roll (24) surface. The intermediate layer (43), coming from the micro embossing roll (24), begins joining with the bottom outer layer (42) between the bottom embossing roll (21) and the micro embossing roll (24). While the intermediate layer (43) and the bottom outer layer (42) are passing between the joining roll (23) and the bottom embossing roll (21), they adhere to each other thanks to the presence of the adhesive provided on the bottom outer layer (42) and thanks to the pressure applied by the joining roll (23) to the bottom embossing roll (21). The presence of the adhesive provides verticality to the bottom outer layer (42) and provides volume by preventing collapsing. Moreover, they make the decorative embossing more apparent. In alternative applications, the intermediate layer (43) can be guided towards the joining roll (23) without using micro embossing roll (24) or by passing through a flat roll, and an intermediate layer (43) without embossing can be obtained.

With reference to Figure 1 and Figure 2b, the bottom outer layer (42), joining to the intermediate layer (43), passes through the transfer rolls (34) and arrives at the second lamination unit (30). The upper outer layer (41) is transferred to the second lamination unit (30) from the unreeling station (11) by means of the transfer rolls (34). The upper outer layer (41) firstly passes between the upper embossing roll (31) and the press roll (32). Here, a pattern, whose ridges are facing outwardly, begins forming on the upper outer layer (41) thanks to the recesses (312) and the tabs (313) of the upper embossing roll (31), and a decorative embossing is formed. The press roll (32) applies pressure to the upper outer layer (41) passing above the upper embossing roll (31), and provides the pattern to be applied to the upper outer layer (41). Adherence is obtained by transferri ng the adhesive, transferred by the anilox roll (352) to the printing roll (353) in the lamination mechanism (35) in the tabs of the upper outer layer (41) where pattern is formed facing the intermediate layer (43), by the printing roll (353) to the tabs (313) of the upper embossing roll (31). The recesses (312) of the upper embossing roll (31) provide the decorative embossing of the upper outer layer (41) facing outwardly. The adherent bottom outer layer (42) and the intermediate layer (43) coming from the upper outer layer (41) and the first lamination unit (20) pass through the joining roll (33) and the upper embossing roll (31) and afterwards they are joined. After the conversion process, the three-layered toilet paper is subject to winding process such that the bottom outer layer (42) coming from the first lamination unit (20) is on the inner side and such that the upper outer layer (41) coming from the second lamination unit (30) is on the outer side. The realized winding process continues as a continuous process.

When the pattern, applied in the outer layers (41, 42), is desired to be changed, embossing rolls (21, 31), having different recesses (212, 312) and tabs (213, 313), are used.

Since one of the items illustrating the pattern, preventing collapse and providing the volume is the intermediate adhesive, the outer layer (41, 42), facing the intermediate adhesive, should join with the intermediate layer (43) before the adhesive dries. Therefore, the distance between the lamination mechanism (27, 35) and the part where the outer layer (41, 42) and the intermediate layer (43) are joined should be substantially short.

In alternative applications, the toilet paper may have up to 9 layers. In the intermediate layer (43), no change is realized and a single layer is used. The number of layers to be described as the bottom outer layer (42) and the upper outer layer (41) can be increased up to 4. In this case, the adhesive, transferred from the lamination mechanism (27, 35), is completely provided in the tabs of the outer layers (41, 42), taking pattern from the embossing rolls (21, 31), facing the intermediate layer (43). The effectiveness of the adhesive coming from the lamination mechanisms (27, 35) can be provided 4 times in the tabs facing the intermediate layer (43) from the outer layer (41, 42). When more than 4 layers are desired to be used in a single outer layer (41, 42), a change is required in the process parameters.

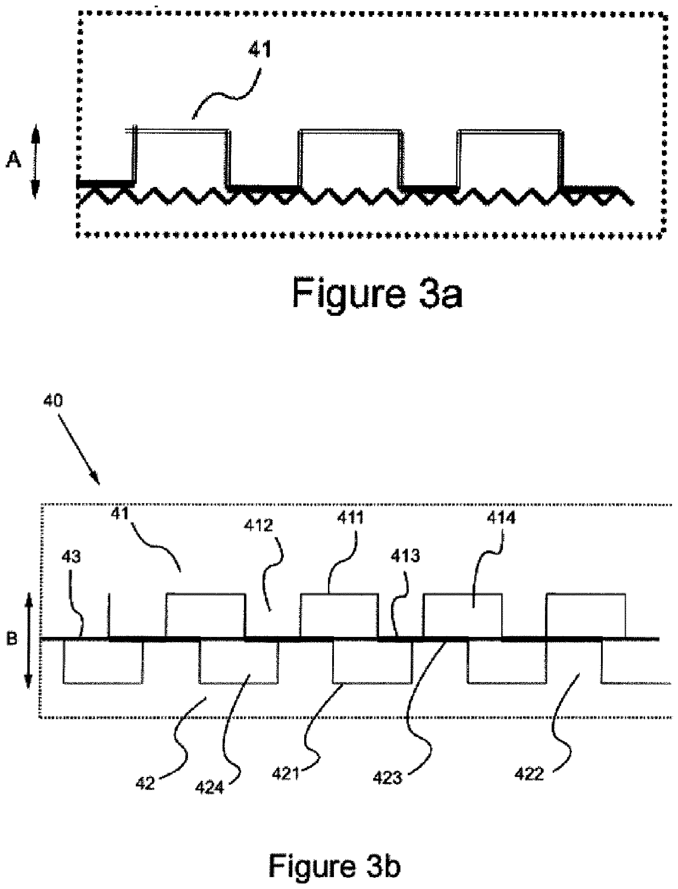

With reference to Figure 3b, the toilet paper, produced by means of said converting machine and converting process, comprises a bottom outer layer (42) contacting the skin, the upper outer layer (41), and the intermediate layer (43) provided between the outer layers (41, 42). The preferred application is for a 3 layered toilet paper. Decorative embossing application is provided outwardly on the outer layers (41, 42) of the toilet paper. The outer layers (41, 42) comprise pluralities of ridging regions (411, 421) provided outwardly according to the embossing received from the embossing rolls (21, 31), gaps (414, 424) provided between the ridging region (411, 421) and the intermediate layer (43), crushing regions (412, 422) provided by the tabs (213, 313) of the embossing roll (21, 31) and adherence regions (413, 423) formed by the crushing parts (412, 422) on the sides of the outer layers (41, 42) facing the intermediate layer (43). The width of the adherence regions (413, 423) is smaller than the width of the ridging regions (411, 421). In the preferred application, the width of the ridging regions (411, 421) and the width of the adherence regions (413, 423) are adjusted such that the crushing parts (412, 422) and the gaps (414, 424) have a quadrangular cross section having inclined corners. According to Figure 3a and 3b, when embossing application is realized in a single outer layer (41, 42), while the width between the two outer layers (41, 42) is equal to A, the width becomes equal to B when embossing application is realized in the two outer layers (41, 42) and it is always valid that B>A. The ridging regions (411, 421) of the outer layers (41, 42) are provided in an opposite manner outwardly and the gaps (414, 424) of the toilet paper provide a volume increase.

Below, a table is given illustrating the comparison between a three-layered toilet paper where double-sided decorative embossing application is realized and a toilet paper where decorative embossing is not applied to both sides.

**Table 1.**

| | Layer (lamination weight) (g/m²) | Dry Resistance (N/m) (MD) | Thickness (MIC) | Softness (%) | Water A bsorpti on Duration (sec) |
|---|---|---|---|---|---|
| Single sided decorative embossing application | 56 | 394 | 577 | 77 | 4,1 |
| Double sided decorative embossing application | 56 | 411 | 610 | 93 | 3,2 |

The example work data realized are given in Table 1. According to Table 1, the toilet paper, decorative embossing is applied to both sides, has a minimum 4 % more dry resistance when compared with the toilet paper where embossing is not applied, the softness thereof is increased by 20 % at least and the volume thereof is increased by 7 % at least. The double-sided decorative embossing application decreases water absorption duration by 2 % at least when compared with the single-sided embossing application, and provides the toilet paper to absorb the water in a more rapid manner. In the toilet paper, where double surface embossing application is realized, the product diameter is kept fixed by means of 20 % lamination volume increase, and at least 10 % less fiber usage is provided. Moreover, the effect of toilet papers on the environment is decreased and saving from fiber usage is provided.

## Claims

1. A converting machine for producing a cleaning paper (40) which comprises a bottom outer layer (42), an upper outer layer (41), and an intermediate layer (43) provided between the outer layers (41, 42), the converti ng machi ne comprisi ng
a first lamination unit (20) comprising a bottom embossing roll (21) provided with recesses (212) and tabs (213) on the outer wall (211) for providing decorative embossing to the bottom outer layer (42), a first lamination mechanism (27) provided so as to transfer adhesive to the side of the bottom outer layer (42) facing the intermediate layer (43), and a first joining roll (23) positioned at a vicinity of the bottom embossing roll (21) for joining the intermediate layer (43) with the bottom outer layer (42); and
a second lamination unit (30) comprising a second lamination mechanism (35) provided so as to transfer adhesive outwardly towards the side of the upper outer layer (41) facing the intermediate layer (43), an upper embossing roll (31) provided with recesses (312) and tabs (313) on the outer wall (311) for providing decorative embossing to the upper outer layer (41) in a direction opposite to the direction of the decorative embossing provided to the bottom outer layer (42) and a second joining roll (33) positioned at a vicinity of the upper embossing roll (31) for joining the adherent bottom outer layer (42) and the intermediate layer (43) with the upper outer layer (41), **characterised in that** the decorative embossing to the bottom outer layer (42) is provided by the recesses (212) of the bottom embossing roll (21) and projects towards the outside of the cleaning paper (40); and **in that** the first lamination unit (20) comprises a micro embossing roll (24) and a first press roll (25) having an outer wall (251) in contact with the outer wall (241) of the micro embossing roll (24), the intermediate layer (43) passing between the micro embossing roll (24) and the press roll (25), the micro embossing roll (24) being provided such that the bottom outer layer (42) and the intermediate layer (43) can pass between the bottom embossing roll (21) and the micro embossing roll (24).

2. A converting machine according to Claim 1, **characterized in that** the first lamination unit (20) comprises a second press roll (22) at a vicinity of the bottom embossing roll (21) whose outer wall (221) is provided in contact with the outer wall (211) of the bottom embossi ng roll (21).

3. A converting machine according to Claim 1, **characterized in that** the micro embossing roll (24) comprises pluralities of ridges in spot form on the outer wall (241) thereof.

4. A converting machine according to Claim 1, **characterized in that** the second lamination unit (30) comprises a third press roll (32) at a vicinity of the upper embossing roll (31), whose outer wall (321) is provided in contact with the outer wall (311) of the upper embossi ng roll (31).

5. A converting machine according to any of the preceding claims, **characterized in that** lamination units (20, 30) comprise pluralities of transfer rolls (26, 34) positioned such that there is a certain distance in between and controlling the tension of the cleaning paper (40) layers (41, 42, 43).

6. A converting machine according to Claim 1, **characterized in that** a respective outer wall (231, 331) of the respective joining roll (23, 33) is in contact to the outer wall (211, 311) of the respective embossing roll (21, 31).

7. A converting machine according to Claim 1, **characterized in that** the lamination mechanisms (27, 35) each comprises a respective adhesive chamber (271, 351) wherein the adhesive is provided, a respective anilox roll (272, 352) provided at a vicinity of the respective adhesive chamber (271, 351) so as to receive the adhesive from the respective adhesive chamber (271, 351), and a respective printing roll (273, 353) positioned between the respective anilox roll (272, 352) and the respective embossing roll (21, 31).

8. A converting machine according to Claim 7, **characterized in that** the distance between the respective lamination mechanism (27, 35) and the part where the outer layers (41, 42) are joined to the intermediate layer (43) is short such that the adhesive transferred to the side of the outer layers (41, 42) facing the intermediate layer (43) does not dry in said distance.

9. A converting machine according to Claim 7, **characterized in that** the anilox rolls (272, 352) comprise pluralities of cells on the surface thereof which are in micron level.

10. A converting machine according to any of the preceding claims, **characterized by** comprising an unreeling unit (10) positioned before the lamination units (20, 30) and having at least one unreeling station (11).

11. A converting process performed by the converting machine for producing a cleaning paper (40) according to any of the preceding claims comprising the process steps of providing embossing to the outer layer (42, 43) of a cleaning paper (40) by means of the recesses (212, 312) and tabs (213, 313) of the outer wall (211, 311) of at least one of the bottom embossing roll (21) and the upper embossing roll (31), and providing micro embossing to the intermediate layer (43) by the micro embossing roll (24), and joining by passing of cleaning paper (40) layers (41, 42, 43) between said at least one embossing roll (21, 31) and the corresponding joining roll (23, 33) positioned at the vicinity of said at least one embossing roll (21, 31),
**characterized by** comprising the steps of:
a) providing decorative embossing outwardly towards the bottom outer layer (42), transferring adhesive to the side of the bottom outer layer (42) facing the intermediate layer (43) by the first lamination mechanism (27) and providing micro embossing to the intermediate layer (43) by the first lamination unit (20),
b) providing decorative embossing to the upper outer layer (41) in a direction opposite to the direction provided to the bottom outer layer (42), transferring adhesive to the side of the upper outer layer (41) facing the intermediate layer (43) by the second lamination mechanism (35) and joining the upper outer layer (41) with the bottom outer layer (42) and the intermediate layer (43) coming from the first lamination unit (20) by the second lamination unit(30).

12. A converting process according to Claim 11, **characterized in that** said step (a) comprises the following sub-steps:
i) providing decorative embossing outwardly on the bottom outer layer (42) by means of the recesses (212) and tabs (213) provided on the bottom embossing roll (21) as the bottom outer layer (42) passes through the bottom embossi ng roll (21)
ii) transferring adhesive towards the tabs of the bottom embossing roll (21) by the first lamination mechanism (27) and thus, transferring adhesive to the side of the bottom outer layer (42) facing the intermediate layer (43)
iii) providing micro embossing to the intermediate layer (43) by passing the intermediate layer (43) between the micro embossing roll (24) and the first press roll (25) having the outer wall (251) in contact with the outer wall (241) of the micro embossing roll (24), the micro embossing roll (24) being provided such that bottom outer layer (42) and intermediate layer (43) can pass between the bottom embossing roll (21) and the micro embossing roll (24)
iv) passing the bottom outer layer (42) and the intermediate layer (43) between the bottom embossing roll (21) and the joining roll (23) and adhering the layers (42, 43) to each other
v) transferri ng the i ntermedi ate layer (43) and the bottom outer layer (42) to the second lamination unit (30) by means of at least one transfer roll (34).

13. A converting process according to Claim 12, **characterized in that** in said step (i), the bottom outer layer (42) passes between the bottom embossing roll (21) and the second press roll (22), the outer wall (221) of which being in contact with the outer wall (211) of the bottom embossing roll (21) and obtaining a decorative embossing by means of the pressure applied by the second press roll (22) to the bottom outer layer (42).

14. A converting process according to Claim 12, **characterized in that** in said step (ii), the adhesive is transferred from the adhesive chamber (271) positioned in the first lamination mechanism (27) to the anilox roll (272) provided at a vicinity of said adhesive chamber (271) and is transferred from said anilox roll (272) to the bottom outer layer (42) by means of the printing roll (273) provided between the bottom embossing roll (21) and said anilox roll (272).

15. A converting process according to Claim 14, **characterized in that** said anilox roll (272) receives the adhesive from said adhesive chamber (271) to the pluralities of cells in micron level provided on the surface and transfers the adhesive to said printing roll (273).

16. A converting process according to Claim 12, **characterized in that** in said step (iii), embossing to the intermediate layer (43) is realized by means of the presence of the pluralities of ridges in spot form provided on the outer wall (241) of the micro embossing roll (24) and by means of the pressure applied by the first press roll (25) to the intermediate layer (43).

17. A converti ng process accordi ng to Claim 11, **characterized in that** step (b) comprises the following sub-steps:
i) providing decorative embossing outwardly by means of the recesses (312) and tabs (313) provided on the upper embossing roll (31) on the upper outer layer (41) as the upper outer layer (41) passes through the upper embossing roll (31)
ii) transferring adhesive to the tabs (313) of the upper embossing roll (31) by the second lamination mechanism (35) and thus transferring adhesive to the side of the upper outer layer (41) facing the intermediate layer (43)
iii) joining the upper outer layer (41) with the bottom outer layer (42) and the intermediate layer (43) coming from the first lamination unit (20) between the second joining roll (33) and the upper embossi ng roll (31).

18. A converting process according to Claim 17, **characterized in that** in step (i), the upper outer layer (41) passes between the upper embossi ng roll (31) and the third press roll (32) having the outer wall (321) provided in contact with the outer wall (311) of the upper embossing roll (31) and decorative embossing is obtained by means of the pressure applied by the third press roll (32) to the upper outer layer (41).

19. A converting process according to Claim 17, **characterized in that** in step (ii), the adhesive is transferred from the adhesive chamber (351), provided in the second lamination mechanism (35), to the anilox roll (352) provided at a vicinity of said adhesive chamber (351) and is transferred from said anilox roll (352) to the upper outer layer (41) by means of the printing roll (353) provided between the upper embossing roll (31) and said anilox roll (352).

20. A converting process according to Claim 19, **characterized in that** said anilox roll (352) takes the adhesive from said adhesive chamber (351) to the pluralities of cells in micron level provided on the surface thereof and transfers the adhesive to said printing roll (353).

## Patentansprüche

1. Verarbeitungsmaschine zur Herstellung eines Reinigungspapiers (40), das eine untere Außenschicht (42), eine obere Außenschicht (41) und eine zwischen den Außenschichten (41, 42) vorgesehene Zwischenschicht (43) umfasst, die Verarbeitungsmaschine umfassend
eine erste Laminiereinheit (20), die eine untere Prägewalze (21) umfasst, die mit Aussparungen (212) und Laschen (213) an der Außenwand (211) versehen ist, um der unteren Außenschicht (42) eine dekorative Prägung vorzusehen, einen ersten Laminiermechanismus (27), der so vorgesehen ist, dass der Klebstoff auf die der Zwischenschicht (43) zugewandte Seite der unteren Außenschicht (42) überträgt, und eine erste Verbindungswalze (23), die in der Nähe der unteren Prägewalze (21) positioniert ist, um die Zwischenschicht (43) mit der unteren Außenschicht (42) zu verbinden; und
eine zweite Laminiereinheit (30), die einen zweiten Laminiermechanismus (35) umfasst, der so vorgesehen ist, dass der Klebstoff nach außen zu der der Zwischenschicht (43) zugewandten Seite der oberen Außenschicht (41) übertragen wird, eine obere Prägewalze (31), die mit Aussparungen (312) und Laschen (313) an der Außenwand (311) versehen ist, um der oberen Außenschicht (41) eine dekorative Prägung in einer Richtung entgegen der Richtung der der unteren Außenschicht (42) vorgesehenen dekorativen Prägung vorzusehen, und eine zweite Verbindungswalze (33), die in einer Nähe der oberen Prägewalze (31) positioniert ist, um die klebende untere Außenschicht (42) und die Zwischenschicht (43) mit der oberen Außenschicht (41) zu verbinden, **dadurch gekennzeichnet, dass** die dekorative Prägung zur unteren Außenschicht (42) durch die Aussparungen (212) der unteren Prägewalze (21) vorgesehen ist und zur Außenseite des Reinigungspapiers (40) vorspringt; und dass die erste Laminiereinheit (20) eine Mikroprägewalze (24) und eine erste Presswalze (25) mit einer Außenwand (251) in Kontakt mit der Außenwand (241) der Mikroprägewalze (24) umfasst, die Zwischenschicht (43), die zwischen der Mikroprägewalze (24) und der Presswalze (25) durchläuft, die Mikroprägewalze (24) so vorgesehen ist, dass die untere Außenschicht (42) und die Zwischenschicht (43) zwischen der unteren Prägewalze (21) und der Mikroprägewalze (24) durchlaufen kann.

2. Verarbeitungsmaschine nach Anspruch 1, **dadurch gekennzeichnet, dass** die erste Laminiereinheit (20) eine zweite Presswalze (22) in der Nähe der unteren Prägewalze (21) umfasst, deren Außenwand (221) in Kontakt mit der Außenwand (211) der unteren Prägewalze (21) vorgesehen ist.

3. Verarbeitungsmaschine nach Anspruch 1, **dadurch gekennzeichnet, dass** die Mikroprägewalze (24) eine Vielzahl von Rippen in Punktform auf der Außenwand (241) derselben umfasst.

4. Verarbeitungsmaschine nach Anspruch 1, **dadurch gekennzeichnet, dass** die zweite Laminiereinheit (30) eine dritte Presswalze (32) in der Nähe der oberen Prägewalze (31) umfasst, deren Außenwand (321) in Kontakt mit der Außenwand (311) der oberen Prägewalze (31) vorgesehen ist.

5. Verarbeitungsmaschine nach einem der vorhergehenden Ansprüche, **dadurch gekennzeichnet, dass** Laminiereinheiten (20, 30) eine Vielzahl von Übertragungswalzen (26, 34) umfassen, die so positioniert sind, dass ein bestimmter Abstand dazwischen besteht und die Spannung der Schichten (41, 42, 43) des Reinigungspapiers (40) steuern.

6. Verarbeitungsmaschine nach Anspruch 1, **dadurch gekennzeichnet, dass** eine zugehörige Außenwand (231, 331) der zugehörigen Verbindungswalze (23, 33) mit der Außenwand (211, 311) der zugehörigen Prägewalze (21, 31) in Kontakt steht.

7. Verarbeitungsmaschine nach Anspruch 1, **dadurch gekennzeichnet, dass** die Laminiermechanismen (27, 35) jeweils eine zugehörige Klebstoffkammer (271, 351), wobei der Klebstoff vorgesehen ist, eine zugehörige Aniloxwalze (272, 352), die in der Nähe der zugehörigen Klebstoffkammer (271, 351) vorgesehen ist, um den Klebstoff aus der zugehörigen Klebstoffkammer (271, 351) aufzunehmen, und eine zugehörige Druckwalze (273, 353) umfassen, die zwischen der zugehörige Aniloxwalze (272, 352) und der zugehörigen Prägewalze (21, 31) positioniert ist.

8. Verarbeitungsmaschine nach Anspruch 7, **dadurch gekennzeichnet, dass** der Abstand zwischen dem zugehörigen Laminiermechanismus (27, 35) und dem Teil, wo die Außenschichten (41, 42) mit der Zwischenschicht (43) verbunden sind, kurz ist, so dass der auf die der Zwischenschicht (43) zugewandte Seite der Außenschichten (41, 42) übertragene Klebstoff in diesem Abstand nicht trocknet.

9. Verarbeitungsmaschine nach Anspruch 7, **dadurch gekennzeichnet, dass** die Aniloxwalze (272, 352) eine Vielzahl von Zellen auf deren Oberfläche umfasst, die im Mikronbereich liegen.

10. Verarbeitungsmaschine nach einem der vorhergehenden Ansprüche, **dadurch gekennzeichnet, dass** sie eine Abspuleinheit (10) umfasst, die vor den Laminiereinheiten (20, 30) positioniert ist und mindestens eine Abspulstation (11) aufweist.

11. Verarbeitungsprozess, der von der Verarbeitungsmaschine durchgeführt wird, um ein Reinigungspapier (40) nach einem der vorhergehenden Ansprüche herzustellen, umfassend die Verfahrensschritte zum Vorsehen einer Prägung der Außenschicht (42, 43) eines Reinigungspapiers (40) mittels der Aussparungen (212, 312) und der Laschen (213, 313) der Außenwand (211, 311) von mindestens einer der unteren Prägewalzen (21) und der oberen Prägewalzen (31), und Vorsehen einer Mikroprägung der Zwischenschicht (43) mittels der Mikroprägewalze (24) und Verbinden durch Durchlauf der Schichten (41, 42, 43) des Reinigungspapiers (40) zwischen der mindestens einen Prägewalze (21, 31) und der entsprechenden Verbindungswalze (23, 33), die in der Nähe der mindestens einen Prägewalze (21, 31) positioniert ist, **dadurch gekennzeichnet, dass** die Schritte umfasst von:
a) Vorsehen einer dekorativen Prägung nach außen zur unteren Außenschicht (42), Übertragen von Klebstoff auf die der Zwischenschicht (43) zugewandte Seite der unteren Außenschicht (42) mittels des ersten Laminiermechanismus (27) und Vorsehen einer Mikroprägung der Zwischenschicht (43) mittels der ersten Laminiereinheit (20),
b) Vorsehen einer dekorativen Prägung der oberen Außenschicht (41) in einer Richtung entgegengesetzt zur Richtung der unteren Außenschicht (42), Übertragen von Klebstoff auf die der Zwischenschicht (43) zugewandte Seite der oberen Außenschicht (41) durch den zweiten Laminiermechanismus (35) und Verbinden der oberen Außenschicht (41) mit der unteren Außenschicht (42) und der von der ersten Laminiereinheit (20) ausgehenden Zwischenschicht (43) durch die zweite Laminiereinheit (30).

12. Verarbeitungsprozess nach Anspruch 11, **dadurch gekennzeichnet, dass** der Schritt (a) die folgenden Unterschritte umfasst:
i) Vorsehen einer dekorativen Prägung nach außen auf der unteren Außenschicht (42) mittels der Aussparungen (212) und Laschen (213), die auf der unteren Prägewalze (21) vorgesehen sind, während die untere Außenschicht (42) die untere Prägewalze (21) durchläuft
ii) Übertragen von Klebstoff auf die Laschen der unteren Prägewalze (21) durch den ersten Laminiermechanismus (27) und damit Übertragen von Klebstoff auf die der Zwischenschicht (43) zugewandte Seite der unteren Außenschicht (42)
iii) Vorsehen einer Mikroprägung der Zwischenschicht (43) durch Durchleiten der Zwischenschicht (43) zwischen der Mikroprägewalze (24) und der ersten Presswalze (25) die die Außenwand (251) in Kontakt mit der Außenwand (241) der Mikroprägewalze (24) aufweist, die Mikroprägewalze (24) ist so vorgesehen, dass die untere Außenschicht (42) und die Zwischenschicht (43) zwischen der unteren Prägewalze (21) und der Mikroprägewalze (24) durchlaufen kann
iv) Durchlaufen der unteren Außenschicht (42) und der Zwischenschicht (43) zwischen der unteren Prägewalze (21) und der Verbindungswalze (23) und Verkleben der Schichten (42, 43) miteinander
v) Übertragen der Zwischenschicht (43) und der unteren Außenschicht (42) auf die zweite Laminiereinheit (30) mittels mindestens einer Übertragungswalze (34).

13. Verarbeitungsprozess nach Anspruch 12, **dadurch gekennzeichnet, dass** in dem genannten Schritt (i) die untere Außenschicht (42) zwischen der unteren Prägewalze (21) und der zweiten Presswalze (22) durchläuft, deren Außenwand (221) mit der Außenwand (211) der unteren Prägewalze (21) in Kontakt steht und durch den vor der zweiten Presswalze (22) auf die untere Außenschicht (42) ausgeübten Drucks eine dekorative Prägung erhält.

14. Verarbeitungsprozess nach Anspruch 12, **dadurch gekennzeichnet, dass** im genannten Schritt (ii) der Klebstoff von der im ersten Laminiermechanismus (27) positionierten Klebstoffkammer (271) auf die in der Nähe der Klebstoffkammer (271) vorgesehene Aniloxwalze (272) übertragen wird und vom genannten Aniloxwalze (272) auf die untere Außenschicht (42) mittels der zwischen der unteren Prägewalze (21) und der Aniloxwalze (272) vorgesehenen Druckwalze (273) übertragen wird.

15. Verarbeitungsprozess nach Anspruch 14, **dadurch gekennzeichnet, dass** die gennante Aniloxwalze (272) den Klebstoff aus der Klebstoffkammer (271) in die Vielzahl der auf der Oberfläche vorgesehenen Zellen im Mikronbereich aufnimmt, und den Klebstoff auf die Druckwalze (273) überträgt.

16. Verarbeitungsprozess nach Anspruch 12, **dadurch gekennzeichnet, dass** in dem genannten Schritt (iii) das Prägen auf die Zwischenschicht (43) durch das Vorliegen der Vielzahl von Rippen in Punktform, die an der Außenwand (241) der Mikroprägewalze (24) vorgesehen sind, und durch den von der ersten Presswalze (25) auf die Zwischenschicht (43) ausgeübten Druck realisiert wird.

17. Verarbeitungsprozess nach Anspruch 11, **dadurch gekennzeichnet, dass** Schritt (b) die folgenden Unterschritte umfasst:
i) Vorsehen einer dekorativen Prägung nach außen mittels der Aussparungen (312) und der auf der oberen Prägewalze (31) auf der oberen Außenschicht (41) vorgesehenen Laschen (313), sobald die obere Außenschicht (41) die obere Prägewalze (31) durchläuft
ii) Übertragen von Klebstoff auf die Laschen (313) der oberen Prägewalze (31) durch den zweiten Laminiermechanismus (35) und damit Übertragen von Klebstoff auf die der Zwischenschicht (43) zugewandte Seite der oberen Außenschicht (41)
iii) Verbinden der oberen Außenschicht (41) mit der unteren Außenschicht (42) und der von der ersten Laminiereinheit (20) ausgehenden Zwischenschicht (43) zwischen der zweiten Verbindungswalze (33) und der oberen Prägewalze (31),

18. Verarbeitungsprozess nach Anspruch 17, **dadurch gekennzeichnet, dass** in Schritt (i) die obere Außenschicht (41) zwischen einer oberen Prägewalze (31) und der dritten Presswalze (32) durchläuft, die eine Außenwand (321) aufweist, die in Kontakt mit der Außenwand (311) der oberen Prägewalze (31) steht, und eine dekorative Prägung durch den von der dritten Presswalze (32) auf die obere Außenschicht (41) ausgeübten Druck erhalten wird.

19. Verarbeitungsprozess nach Anspruch 17, **dadurch gekennzeichnet, dass** in Schritt (ii) der Klebstoff von der im zweiten Laminiermechanismus (35) vorgesehenen Klebstoffkammer (351) auf die in der Nähe der Klebstoffkammer (351) vorgesehene Aniloxwalze (352) übertragen wird und von der Aniloxwalze (352) auf die obere Außenschicht (41) mittels der zwischen der oberen Prägewalze (31) und der Aniloxwalze (352) vorgesehenen Druckwalze (353) übertragen wird.

20. Verarbeitungsprozess nach Anspruch 19, **dadurch gekennzeichnet, dass** die Aniloxwalze (352) den Klebstoff aus der Klebstoffkammer (351) in die Vielzahl der auf ihrer Oberfläche vorgesehenen Zellen im Mikronbereich aufnimmt und den Klebstoff auf die Druckwalze (353) überträgt.

## Revendications

1. Machine de conversion pour la production d'un papier de nettoyage (40) qui comprend
une couche externe inférieure (42), une couche externe supérieure (41), et une couche intermédiaire (43) prévue entre les couches externes (41, 42), la machine de conversion comprenant
une première unité de stratification (20) comprenant un rouleau de gaufrage inférieur (21) muni d'évidements (212) et de pattes (213) sur la paroi externe (211) pour fournir un gaufrage décoratif sur la couche externe inférieure (42), un premier mécanisme de stratification (27) prévu de manière à transférer l'adhésif sur le côté de la couche externe inférieure (42) faisant face à la couche intermédiaire (43), et un premier rouleau de jonction (23) positionné à proximité du rouleau de gaufrage inférieur (21) pour joindre la couche intermédiaire (43) avec la couche externe inférieure (42) ; et
une deuxième unité de stratification (30) comprenant un deuxième mécanisme de stratification (35) prévu de manière à transférer l'adhésif à l'extérieur vers le côté de la couche externe supérieure (41) faisant face à la couche intermédiaire (43), un rouleau de gaufrage supérieur (31) muni d'évidements (312) et de pattes (313) sur la paroi externe (311) pour fournir un gaufrage décoratif sur la couche externe supérieure (41) dans une direction opposée à la direction du gaufrage décoratif prévu sur la couche externe inférieure (42) et un deuxième rouleau de jonction (33) positionné à proximité du rouleau de gaufrage supérieur (31) pour joindre la couche externe inférieure adhérente (42) et la couche intermédiaire (43) avec la couche externe supérieure (41), **caractérisée en ce que** le gaufrage décoratif sur la couche externe inférieure (42) est fourni par les évidements (212) du rouleau de gaufrage inférieur (21) et dépasse à l'extérieur du papier de nettoyage (40) ; et **en ce que** la première unité de stratification (20) comprend un rouleau de micro-gaufrage (24) et un premier rouleau de pressage (25) ayant une paroi externe (251) en contact avec la paroi externe (241) du rouleau de micro-gaufrage (24), la couche intermédiaire (43) passant entre le rouleau de micro-gaufrage (24) et le rouleau de pressage (25), le rouleau de micro-gaufrage (24) étant prévu de telle sorte que la couche externe inférieure (42) et la couche intermédiaire (43) puissent passer entre le rouleau de gaufrage inférieur (21) et le rouleau de micro-gaufrage (24).

2. Machine de conversion selon la revendication 1, **caractérisée en ce que** la première unité de stratification (20) comprend un deuxième rouleau de pressage (22) à proximité du rouleau de gaufrage inférieur (21) dont la paroi externe (221) est prévue en contact avec la paroi externe (211) du rouleau de gaufrage inférieur (21).

3. Machine de conversion selon la revendication 1, **caractérisée en ce que** le rouleau de micro-gaufrage (24) comprend des pluralités de crêtes en forme de tache sur la paroi externe (241) de celui-ci.

4. Machine de conversion selon la revendication 1, **caractérisée en ce que** la deuxième unité de stratification (30) comprend un troisième rouleau de pressage (32) à proximité du rouleau de gaufrage supérieure (31) dont la paroi externe (321) est prévue en contact avec la paroi externe (311) du rouleau de gaufrage supérieure (31).

5. Machine de conversion selon l'une quelconque des revendications précédentes, **caractérisée en ce que** les unités de stratification (20, 30) comprennent plusieurs rouleaux de transfert (26, 34) positionnés de telle sorte qu'il y ait une certaine distance entre eux et contrôlant la tension des couches (41, 42, 43) de papier de nettoyage (40).

6. Machine de conversion selon la revendication 1, **caractérisée en ce que** une paroi externe respective (231, 331) du rouleau de jonction respectif (23, 33) est en contact avec la paroi externe (211, 311) du rouleau de gaufrage respectif (21, 31).

7. Machine de conversion selon la revendication 1, **caractérisée en ce que** les mécanismes de stratification (27, 35) comprennent chacun une chambre d'adhésif respective (271, 351) dans laquelle l'adhésif est fourni, un rouleau anilox respectif (272, 352) prévu à proximité de la chambre d'adhésif respective (271, 351) de manière à recevoir l'adhésif de la chambre d'adhésif respective (271, 351), et un rouleau d'impression respectif (273, 353) positionné entre le rouleau anilox respectif (272, 352) et le rouleau de gaufrage respectif (21, 31).

8. Machine de conversion selon la revendication 7, **caractérisée en ce que** la distance entre le mécanisme de stratification respectif (27, 35) et la partie dans laquelle les couches externes (41, 42) sont jointes à la couche intermédiaire (43) est courte de sorte que l'adhésif transféré sur le côté des couches externes (41, 42) fait face à la couche intermédiaire (43) ne sèche pas dans ladite distance.

9. Machine de conversion selon la revendication 7, **caractérisée en ce que** les rouleaux anilox (272, 352) comprennent plusieurs cellules sur leur surface qui sont au niveau du micron.

10. Machine de conversion selon l'une quelconque des revendications précédentes, **caractérisée par** comprenant une unité de déroulement (10) positionnée avant les unités de stratification (20, 30) et ayant au moins une station de déroulement (11).

11. Procédé de conversion effectuée par la machine de conversion pour produire un papier de nettoyage (40) selon l'une quelconque des revendications précédentes comprenant les étapes de procédé consistant à fournir un gaufrage à la couche externe (42, 43) d'un papier de nettoyage (40) au moyen des évidements (212, 312) et des pattes (213, 313) de la paroi externe (211, 311) d'au moins un rouleau de gaufrage inférieur (21) et le rouleau de gaufrage supérieur (31), et fournir un micro-gaufrage à la couche intermédiaire (43) par le rouleau de micro-gaufrage (24), et joindre par passage de couches (41, 42, 43) de papier de nettoyage (40) entre ledit au moins un rouleau de gaufrage (21, 31) et le rouleau de jonction correspondant (23, 33) placé à proximité dudit au moins un rouleau de gaufrage (21, 31), **caractérisé en ce qu'**il comprend les étapes consistant à :
a) fournir un gaufrage décoratif à l'extérieur vers la couche externe inférieure (42), le transfert d'adhésif sur le côté de la couche externe inférieure (42) faisant face à la couche intermédiaire (43) par le premier mécanisme de stratification (27) et fournir un micro-gaufrage à la couche intermédiaire (43) par la première unité de stratification (20),
b) fournir un gaufrage décoratif sur la couche externe supérieure (41) dans une direction opposée prévu sur la couche externe inférieure (42) et transférer l'adhésif au côté de la couche externe supérieure (41) faisant face à la couche intermédiaire (43) par le deuxième mécanisme de stratification (35) et joindre la couche externe supérieure (41) avec la couche externe inférieure (42) et la couche intermédiaire (43) venant de la première unité de stratification (20) par la deuxième unité de stratification (30).

12. Procédé de conversion selon la revendication 11, **caractérisé en ce que** ladite étape (a) comprend les sous-étapes consistant à:
i) fournir un gaufrage décoratif à l'extérieur sur la couche externe inférieure (42) au moyen des évidements (212) et des pattes (213) prévus sur le rouleau de gaufrage inférieur (21) en tant que la couche externe inférieure (42) passe au travers le rouleau de gaufrage inférieur (21)
ii) transférer l'adhésif vers les pattes du rouleau de gaufrage inférieur (21) par le premier mécanisme de stratification (27) et ainsi, transférer l'adhésif sur le côté de la couche externe inférieure (42) faisant face vers la couche intermédiaire (43)
iii) fournir un micro-gaufrage à la couche intermédiaire (43) par passage de la couche intermédiaire (43) entre le rouleau micro-gaufrage (24) et le premier rouleau de pressage (25) ayant la paroi externe (251) en contact avec la paroi externe (241) du rouleau micro-gaufrage (24), le rouleau de micro-gaufrage (24) étant prévu de telle sorte que la couche externe inférieure (42) et la couche intermédiaire (43) puissent passer entre le rouleau de gaufrage inférieur (21) et le rouleau de micro-gaufrage (24).
iv) passer la couche externe inférieure (42) et la couche intermédiaire (43) entre le rouleau de gaufrage inférieur (21) et le rouleau de jonction (23) et faire adhérer les couches (42, 43) entre elles
v) transférer la couche intermédiaire (43) et la couche externe inférieure (42) vers la deuxième unité de stratification (30) au moyen d'au moins un rouleau de transfert (34).

13. Procédé de conversion selon la revendication 12, **caractérisé en ce que** dans ladite étape (i), la couche externe inférieure (42) passe entre le rouleau de gaufrage inférieur (21) et le second rouleau de pressage (22), dont la paroi externe (221) étant en contact avec la paroi externe (211) du rouleau de gaufrage inférieur (21) et obtenant un gaufrage décoratif au moyen de la pression appliquée par le second rouleau de pressage (22) sur la couche externe inférieure (42).

14. Procédé de conversion selon la revendication 12, **caractérisé en ce que** dans ladite étape (ii), l'adhésif est transféré de la chambre d'adhésif (271) positionnée dans le premier mécanisme de stratification (27) au rouleau anilox (272) prévu à proximité de ladite chambre d'adhésif (271) et est transféré dudit rouleau anilox (272) à la couche externe inférieure (42) au moyen du rouleau d'impression (273) prévu entre le rouleau de gaufrage inférieur (21) et ledit rouleau anilox (272).

15. Procédé de conversion selon la revendication 14, **caractérisé en ce que** ledit rouleau anilox (272) reçoit l'adhésif de ladite chambre d'adhésif (271) à la pluralité de cellules au niveau micron prévu sur la surface et transfère l'adhésif audit rouleau d'impression (273).

16. Procédé de conversion selon la revendication 12, **caractérisé en ce que** dans ladite étape (iii), le gaufrage sur la couche intermédiaire (43) est réalisé au moyen de la présence des pluralités de crêtes en forme de tache prévues sur la paroi externe (241) du rouleau micro-gaufrage (24) et au moyen de la pression appliquée par le premier rouleau de pressage (25) à la couche intermédiaire (43).

17. Procédé de conversion selon la revendication 11, **caractérisé en ce que** l'étape (b) comprend les sous-étapes consistant à:
i) fournir un gaufrage décoratif à l'extérieur au moyen des évidements (312) et des pattes (313) prévus sur le rouleau de gaufrage supérieur (31) sur la couche externe supérieure (41) en tant que la couche externe supérieure (41) passe au travers le rouleau de gaufrage supérieur (31)
ii) transférer l'adhésif aux pattes (313) du rouleau de gaufrage supérieur (31) par le deuxième mécanisme de stratification (35) et ainsi, transférer l'adhésif sur le côté de la couche externe supérieure (41) faisant face vers la couche intermédiaire (43)
iii) joindre la couche externe supérieure (41) avec la couche externe inférieure (42) et la couche intermédiaire (43) venant de la première unité de stratification (20) entre le deuxième rouleau de jonction (33) et le rouleau de gaufrage supérieur (31),

18. Procédé de conversion selon la revendication 17, **caractérisé en ce que** dans l'étape (i), la couche externe supérieure (41) passe entre le rouleau de gaufrage supérieur (31) et le troisième rouleau de pressage (32) ayant la paroi externe (321) prévue en contact avec la paroi externe (311) du rouleau de gaufrage supérieur (31) et un gaufrage décoratif est obtenu au moyen de la pression appliquée par le troisième rouleau de pressage (32) à la couche externe supérieure (41).

19. Procédé de conversion selon la revendication 17, **caractérisé en ce que** dans l'étape (ii), l'adhésif est transféré de la chambre d'adhésif (351) prévue dans le deuxième mécanisme de stratification (35) au rouleau anilox (352) prévu à proximité de ladite chambre d'adhésif (351) et est transféré dudit rouleau anilox (352) à la couche externe supérieure (41) au moyen du rouleau d'impression (353) prévu entre le rouleau de gaufrage supérieure (31) et ledit rouleau anilox (352).

20. Procédé de conversion selon la revendication 19, **caractérisé en ce que** ledit rouleau anilox (352) prend l'adhésif de ladite chambre d'adhésif (351) à la pluralité de cellules au niveau micron prévu sur la surface de celui-ci et transfère l'adhésif audit rouleau d'impression (353).
